# EUROPEAN PATENT APPLICATION

(11) **EP 3 173 259 A1**
(43) Date of publication of application: **31.05.2017**
(21) Application number: 14898209.3
(22) Date of filing: 26.08.2014
(51) Int. Cl.: B60C 23/04

(54) **SELF-PROGRAMMING TYRE PRESSURE MONITORING DEVICE AND IMPLEMENTATION METHOD THEREFOR**

(30) Priority: 23.07.2014 CN 201410353797
(71) Applicant: Hamaton Automotive Technology Co., Ltd., Yuhang District Hangzhou (CN)
(72) Inventor: FANG, Hanjie, Shanghai 201100 (CN)
(74) Representative: Cabinet Chaillot
(86) International application number: PCT/CN2014/085140
(87) International publication number: WO 2016/011695

(57) **Abstract**

A self-programming tyre pressure monitoring device and an implementation method therefor. The implementation method for the self-programming tyre pressure monitoring device comprises: pre-storing a plurality of format codes, and selecting corresponding format codes according to guidance codes generated by a self-programming tyre pressure monitoring device. The self-programming tyre pressure monitoring device comprises: a code input unit (5) for generating guidance codes; a microcontroller unit (3) for pre-storing a plurality of format codes, and selecting corresponding format codes according to the guidance codes; a radio-frequency transmission unit (2) for sending data from the microcontroller unit (3) at a given radio frequency; and a sensor unit (4) for collecting external data, and sending the collected external data to the microcontroller unit (3). The self-programming tyre pressure monitoring device and implementation method therefor do not need external tools, so that the operation is simple; only a few data packets are sent each time, so that the service life of a battery can be greatly prolonged; and more formats and contents can be stored, so that the inventory of vendors is significantly reduced.

## Description

### Technical Field

The present invention relates to a Tire Pressure Monitoring System (TPMS), and more specifically relates to a self-programming tire pressure monitoring device and implementation method therefor.

### Background Art

A tire pressure monitoring (TPM) sensor is installed inside a tire (usually integrated with a valve of the tire) where it can sense various conditions of the tire on its own, including tire pressure, tire temperature and tire rotation etc. and then convert the sensed conditions into a given data format for sending to a receiver in the car by RF transmission. After the receiver has received the data, corresponding feedback will be generated (by means of texts, graphics or sounds) to inform the driver whether the tire has anything abnormal. The TPM sensor and the receiver together constitute a complete TPMS which informs the driver of the conditions of the tire to ensure driving safety.

TPM sensor nowadays can be one of the following two types divided according to different markets: an original equipment (OE) sensor and an after-sale sensor. An OE sensor is a sensor having a specific type of data format (protocol), developed by a supplier particularly for a specific client (car manufacturer). The OE sensor is installed in the car before it is launched in the market. An OE sensor transmits a single type (or a unique type) of data format during feedback or operation. Different OE sensors developed by different suppliers have different data formats (may be identical sometimes). Even a same supplier may develop various sensors with different data formats according to client's requirements. For example, a sensor installed on a General Motors (GM) vehicle transmits data with a format different from the sensor installed on a BMW vehicle. In other words, the sensors used by these two brands are not exchangeable. Further, cars of the same model but manufactured in different years are very likely to have different sensors which are not exchangeable. Therefore, from year 2000 or even earlier, there are OE sensors having as many as hundred types of protocols.

Since a TPM sensor requires a battery to operate, it has a definite service period. In general, an OE TPMS sensor can be used for 5-10 years. If a TPM sensor of a car is damaged or its battery is depleted and thus requires replacement, a same model of sensor is in principle required, meaning that the distributors should stockpile different sensors to meet the requirements of different clients. As such, it is demanding for the entire after-sale service industry. Waste of large amount of resources will also be resulted.

Therefore, the following types of after-sale sensor have emerged in the market to solve the problem of excessive stock stocked up by the distributers:

### 1. Programmable sensor

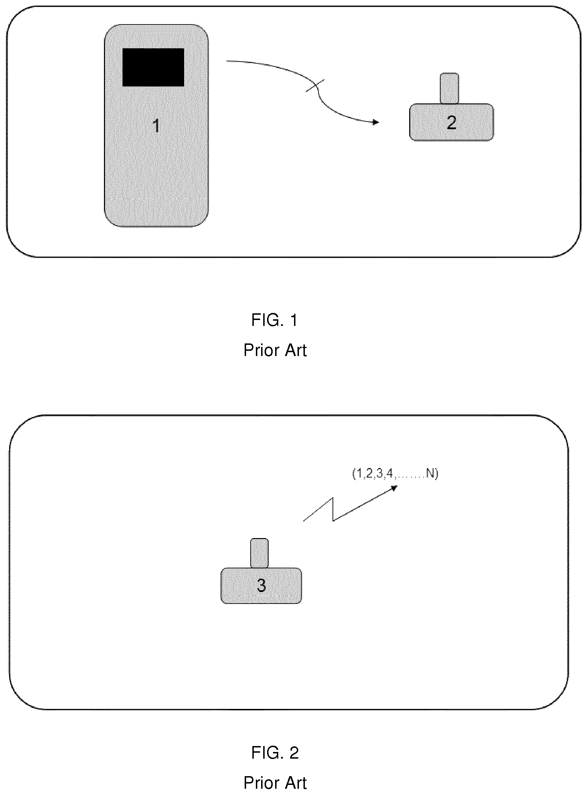

As shown in FIG. 1, a programmable sensor is operated with a specialized programming tool or device 1. The operation principle is to firstly store protocols of different sensors into the specialized programming tool, and then input software codes into a blank sensor 2 via wire or wireless means. In some cases, the sensor 2 has to be pre-written with some guidance programs in order to complete the programming process. Alternatively, several protocols may be stored in the sensor 2 and chosen in accordance with commands transmitted by wire or wireless means from the tool 1. After programming of the sensor 2 is finished, the sensor 2 transmits a unique type of codes (corresponding to the choice made by the tool). This kind of after-sale sensor is characterized in that programming of the sensor may include many types of protocols. Therefore, a distributor may only have to prepare a few types of sensors for replacement of all TPM sensors of cars of different requirements. Also, since the sensor only transmits one type of data format at one time, its battery has a longer service life. However, this kind of sensor has a disadvantage that it must be operated with a specialized programming tool or equipment. The entire operation process is therefore more complicated. Also, the programming tool requires scheduled or non-scheduled updates, thereby requiring operation by a more skillful operator. Besides, a wireless programmable sensor is designed not being programmable after being used for a certain period of time. Therefore, the sensor is not reusable and hence not convenient to use.

### 2. Multi-protocol/compound-protocol sensor

As shown in FIG. 2, the operating principle of a multi-protocol sensor is to firstly write different types of formats into the sensor 3 in the form of software programs, and then output and transmit all the formats at the same time via wireless means in response to a certain condition (e.g. rotation or low frequency RF command). This kind of TPM sensor is advantageous in that it does not require a programming tool, and thus it is more convenient to use. However, among all the formats output and transmitted every time, only one format is applicable to the target car model and all other formats are useless. Therefore, much power is wasted in transmitting useless formats, and the battery will run out of power in a short period of time. Besides, due to short battery service life, only limited types of formats can be stored in the sensor. Compared with programmable sensors, distributors may need to have more types of sensors in stock in order to meet the clients' needs. In short, this kind of sensor has the disadvantages of short battery service life, limited format types stored in the sensor, and distributors may need to have more types of sensors in stock in order to meet the clients' needs.

In view of the above, a person skilled in this field of art has to provide a technical solution to develop a kind of sensor which has longer service life, which is easy to operate, and which can transmits signals with more contents and available formats so as to significantly reduce stock amount.

### Disclosure of the Invention

An object of the present invention is to provide a self-programming tire pressure monitoring device and method. The present invention is easy to operate and has a long service life, and can also significantly reduce stock amount of distributor.

The present invention provides an implementation method of a self-programming tire pressure monitoring device; the method comprises storing multiple types of format codes in advance, and then choosing corresponding type of format codes according to guidance codes generated by the self-programming tire pressure monitoring device.

The method comprises the following steps: generating guidance codes, wherein the self-programming tire pressure monitoring device generates the guidance codes; receiving the guidance codes, wherein the guidance codes are received when an external coding condition is satisfied; inputting format codes, which comprises responding to the corresponding format codes according to the guidance codes being received, to generate data formats that correspond to the format codes.

The method also comprises an initialization step, which comprises configuring guidance procedure, designating and collecting parameters, and executing specific data formats.

The method also comprises execution step, which comprises executing the data formats and transmitting data signals of the data formats.

The method also comprises a monitoring step, which comprises executing the steps of generating the guidance codes, receiving the guidance codes and inputting the format codes again when another external coding condition different from the current external coding condition is detected.

According to the method, the external coding condition includes but not limited to pressure, temperature, acceleration and battery voltage.

According to the method, the step of receiving the guidance codes further comprises refusing to receive the guidance codes when the external coding condition is not satisfied.

According to the method, the step of inputting the format codes further comprises entering a to-be-defined condition and responding to the corresponding format codes within a specific period of time.

The present invention also provides a self-programming tire pressure monitoring device. The device comprises a code input unit which generates guidance codes; a microcontroller unit which stores multiple types of format codes in advance, and chooses corresponding type of format codes according to the guidance codes; a RF transmission unit which transmits data from the microcontroller unit with a specific radio frequency; and a sensor unit which collects external data and transmits the external data collected to the microcontroller unit.

The device also comprises an expanded storage unit which stores data when the microcontroller unit does not have enough storage space.

The device also comprises a power source unit which supplies power to the self-programming tire pressure monitoring device.

According to the device, the microcontroller unit comprises a code input module; when an external coding condition is satisfied, the code input module receives the guidance codes and responds to corresponding format codes according to the guidance codes received, so as to generate data formats corresponding to the format codes.

According to the device, the microcontroller unit also comprises a guidance procedure module; the guidance procedure module initializes the device; the initialization comprises configuring a guidance procedure of the device, designating and collecting parameters of the device, and executing a specific data format.

According to the device, the microcontroller unit also comprises a procedure execution module which executes a procedure of the data formats that correspond to the format codes, and transmits data signals of the data formats to the RF transmission unit.

According to the device, the guidance procedure module guides the procedure to the procedure execution module under a certain condition.

According to the device, the sensor unit comprises a function module of the sensor's functions; the function module collects basic data; the basic data includes but not limited to pressure, temperature, acceleration and battery voltage.

According to the device, the microcontroller unit monitors the external coding condition; when another external coding condition different from the current external coding condition is detected, the code input unit receives guidance codes, and the device responds to format codes corresponding to the guidance codes received, to generate a data formats corresponding to the format codes.

According to the device, the external coding condition is a set value of pressure, temperature or acceleration etc.

According to the device, the code input module refuses to receive the guidance codes when the external coding condition is not satisfied.

According to the device, the code input module enters a to-be-defined condition and responds to the corresponding format codes within a certain period of time.

According to the device, the device also comprises a low frequency transmission unit which creates a low frequency communication response channel and responds to external low frequency commands.

The present invention has the following advantages and beneficial effects: Firstly, the sensor of the present invention does not require external tools and is very simple to operate. Further, the sensor of the present invention transmits only a few data packets each time, thereby significantly lengthening the service life of the battery. Also, the sensor of the present invention can store more formats and contents compared with a typical multi-protocol sensor, thereby significantly reducing the stock amount of the distributor.

### Brief Description of Drawings

FIG. 1 is a programmable sensor according to prior art.
FIG. 2 is a multi-protocol/compound protocol sensor according to prior art.
FIG. 3 is a block diagram showing a structure of a self-programming tire pressure monitoring sensor according to an embodiment of the present invention.
FIG. 4 is a flow chart of a sensor procedure module of the self-programming tire pressure monitoring sensor.

### Best Mode for Carrying out the Invention

The present invention will be further described in detail below with reference to the drawings and an embodiment for easier comprehension of the objects, characteristics and advantages of the present invention.

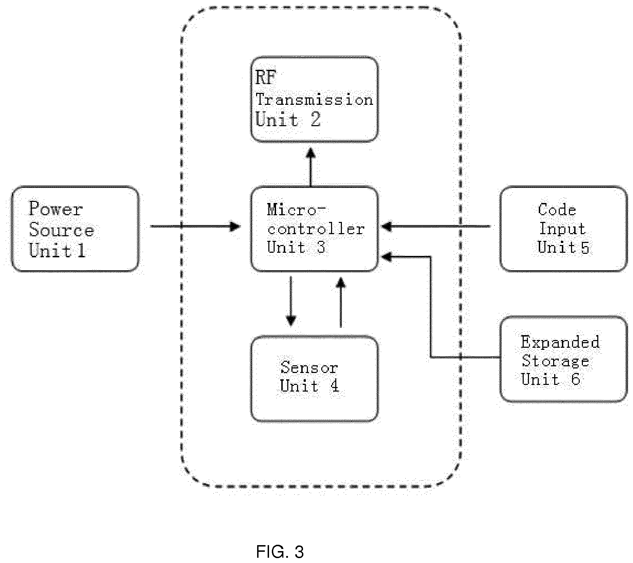

FIG. 3 is a block diagram showing a structure of an embodiment of a self-programming tire pressure monitoring sensor. As shown in FIG. 3, the self-programming tire pressure sensor comprises a sensor unit 4, a microcontroller unit 3, a code input unit 5, a radio-frequency (RF) transmission unit 2 and a power source unit 1. The sensor unit 4, the code input unit 5 and the RF transmission unit 2 are connected with the microcontroller unit 3.

The microcontroller unit 3 can be a typical microcontroller for processing data, coding the data and sending the data to the RF transmission unit 2. Such typical microcontroller also executes software programs required to be run in the tire pressure monitoring sensor.

The RF transmission unit 2 transmits the data according to a specified radio frequency.

The sensor unit 4 comprises a pressure sensor unit, a temperature sensor unit, an acceleration sensor unit, a battery voltage monitoring unit and a low frequency channel unit etc. The sensor unit 4 collects data from an external environment. The data collected by the sensor unit 4 is directly transmitted to the microcontroller unit 3 for processing.

The power source unit 1 supplies power to the entire self-programming tire pressure monitoring sensor.

The inventive concept of the present invention is the code input unit 5 additionally provided to a typical structure of a sensor. An expanded storage unit 6 can also be additionally provided to increase the ability of the sensor to store different formats.

A principle of the present invention is to firstly store a plurality of TPMS formats in the microcontroller unit 3 according to a certain method. If the microcontroller unit 3 does not have sufficient storage space, the expanded storage unit 6 can be additionally provided. The formats in the self-programming tire pressure monitoring device are stored according to a specific method.

The code input unit 5 generates codes, which are then input into the microcontroller unit 3 for choosing and defining required format types. There is no limitation as to a coding method of the code input unit 5. The coding method can be simple, or can be complicated. Defined formats will then be output and transmitted via wireless means like the situation in a typical TPM sensor. By creating a special protocol between the code input unit 5 and software program, codes being coded to the microcontroller unit 3 can be reusable.

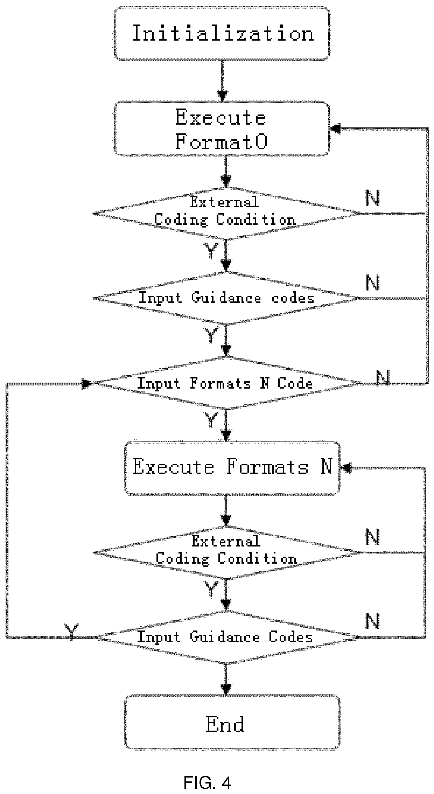

FIG. 4 is a flow chart showing an implementation method of the self-programming tire pressure monitoring sensor. The method comprises the following steps:
In an initialization phase, configuring a guidance procedure of the sensor, activating a function module of the sensor to designate and collect parameters of pressure, temperature and acceleration etc, and executing a specified format software procedure.

When a specific requirement of an external coding condition such as a condition relating to pressure, temperature or acceleration is satisfied, receiving guidance code commands. For example, when pressure is smaller than a set value, such as 30KPA, start receiving and responding the guidance code commands; when pressure is larger than the set value (sensor placed in the tire, and pressure is applied), configuring the sensor in an execution condition where it cannot receive and respond to the guidance code commands.

Responding to specific guidance code commands, so that the sensor enters a to-be-defined condition; and then receiving and responding to code input commands of specific formats within a specific period of time.

Inputting specific format code commands after the guidance code commands, and the microcontroller unit 3 will perform parameter rearrangement of the guidance procedure to generate data formats that satisfies the requirement.

Executing the new formats; after completing the input of the format code commands, the procedure will execute an execute mode of the new sensor formats and transmit the new format data signals.

While running the software having the new formats, the external coding condition and data will be monitored to determine whether the sensor will be defined again or whether the current format will be continued to be executed.

The self-programming tire pressure monitoring sensor of the present invention does not require data transmission and commands from outside. The present invention uses the code input unit carried within the sensor to generate specific coding data which will be transmitted to the microcontroller unit within the sensor, and determines what formats of TPMS data are to be generated and transmitted in the execution of subsequent procedures in order to satisfy a particular data format required by a particular car model. In other words, the present invention can generate different formats of TPMS data without the need of external coding or programming tool.

Besides, each format information or procedure information stored in the storage unit of the sensor corresponds to a specific code and also to a particular car model in actual implementation. When an external condition for defining/programming the senor is satisfied, a user who wishes to define the sensor corresponding to a particular car model is only required to directly input associated codes so that the sensor is enabled to execute a procedure of a sensor type specifically corresponding to the particular car model and transmits data that corresponds to the requirements required by the particular car model.

Also, when the sensor is executing a particular data format, the sensor may respond to specific codes and then be defined/programmed again if a certain external condition is satisfied. If the external condition is not satisfied, the sensor will refuse to respond to corresponding code commands and cannot be defined or re-defined/re-programmed.

Coding method of the input of the present invention is not subject to limitation. The purpose of coding is to let the microcontroller module recognize the codes and eventually generate and execute the running procedure of the formats in concern.

The present invention can generate TPMS data of different formats without the need of external coding or programming tool. The present invention is very simple to operate. Besides, the sensor of the present invention only transmits a few data packets each time, thereby significantly lengthening the service life of the battery. Also, the present invention can store much more formats and contents compared with a typical multi-protocol sensor, thereby significantly reducing the stock amount required at the distributor.

The self-programming tire pressure monitoring method and device according to the present invention have been described in detail above. An embodiment of the present invention is described to explain the principle and implementation of the present invention. The above embodiment is intended to assist in understanding the method of the present invention and its essence. A person skilled in this field of art may make changes to the embodiment and the field of application of the present invention according to the teachings of the present invention. In summary, the description herein should not limit the present invention.

## Claims

1. An implementation method of a self-programming tire pressure monitoring device, wherein the method comprises storing multiple types of format codes in advance, and then choosing corresponding type of format codes according to guidance codes generated by the self-programming tire pressure monitoring device.

2. The method of claim 1, wherein the method comprises the following steps:
generating guidance codes, wherein the self-programming tire pressure monitoring device generates the guidance codes;
receiving the guidance codes, wherein the guidance codes are received when an external coding condition is satisfied;
inputting format codes, which comprises responding to the corresponding format codes according to the guidance codes being received, so as to generate data formats that correspond to the format codes.

3. The method of claim 2, wherein the method also comprises an initialization step, which comprises configuring a guidance procedure, designating and collecting parameters, and executing a specific data format.

4. The method of claim 2, wherein the method also comprises an execution step, which comprises executing the data formats and transmitting data signals of the data formats.

5. The method of claim 2, wherein the method also comprises a monitoring step, which comprises executing the steps of generating the guidance codes, receiving the guidance codes and inputting the format codes again when another external coding condition different from the current external coding condition is detected.

6. The method of claim 2, wherein the external coding condition includes but not limited to pressure, temperature, acceleration and battery voltage.

7. The method of claim 2, wherein the step of receiving the guidance codes further comprises refusing to receive the guidance codes when the external coding condition is not satisfied.

8. The method of claim 2, wherein the step of inputting the format codes further comprises entering a to-be-defined condition and responding to the corresponding format codes within a specific period of time.

9. A self-programming tire pressure monitoring device, comprising:
a code input unit which generates guidance codes;
a microcontroller unit which stores multiple types of format codes in advance, and chooses corresponding type of format codes according to the guidance codes;
a radio-frequency (RF) transmission unit which transmits data from the microcontroller unit with a specific radio frequency; and
a sensor unit which collects external data and transmits the external data collected to the microcontroller unit.

10. The self-programming tire pressure monitoring device of claim 9, wherein the device also comprises an expanded storage unit which stores data when the microcontroller unit does not have enough storage space.

11. The self-programming tire pressure monitoring device of claim 9, wherein the device also comprises a power source unit which supplies power to the self-programming tire pressure monitoring device.

12. The self-programming tire pressure monitoring device of claim 9, wherein the microcontroller unit comprises a code input module; when an external coding condition is satisfied, the code input module receives the guidance codes and responds to a corresponding format codes according to the guidance codes received, so as to generate data formats corresponding to the format codes.

13. The self-programming tire pressure monitoring device of claim 12, wherein the microcontroller unit also comprises a guidance procedure module; the guidance procedure module initializes the device; the initialization comprises configuring a guidance procedure of the device, designating and collecting parameters of the device, and executing a specific data format.

14. The self-programming tire pressure monitoring device of claim 12, wherein the microcontroller unit also comprises a procedure execution module which executes a procedure of the data formats that correspond to the format codes, and transmits data signals of the data formats to the RF transmission unit.

15. The self-programming tire pressure monitoring device of claim 14, wherein the guidance procedure module guides the procedure to the procedure execution module under a certain condition.

16. The self-programming tire pressure monitoring device of claim 9, wherein the sensor unit comprises a function module of the sensor's functions; the function module collects basic data; the basic data includes but not limited to pressure, temperature, acceleration and battery voltage.

17. The self-programming tire pressure monitoring device of claim 12, wherein the microcontroller unit monitors the external coding condition; when another external coding condition different from the current external coding condition is detected, the code input unit receives guidance codes, and the device responds to corresponding format codes according to the guidance codes received, so as to generate data formats corresponding to the format codes.

18. The self-programming tire pressure monitoring device of claim 12, wherein the code input module refuses to receive the guidance codes when the external coding condition is not satisfied.

19. The self-programming tire pressure monitoring device of claim 12, wherein the code input module enters a to-be-defined condition and responds to the corresponding format codes within a certain period of time.

20. The self-programming tire pressure monitoring device of claim 9, wherein the device also comprises a low frequency transmission unit which creates a low frequency communication response channel and responds to external low frequency commands.
